# EUROPÄISCHE PATENTSCHRIFT

(11) **EP 2 633 594 B1**
(45) Veröffentlichungstag und Bekanntmachung des Hinweises auf die Patenterteilung: **02.11.2016**
(21) Anmeldenummer: 11811323.2
(22) Anmeldetag: 16.12.2011
(51) Int. Cl.: H02G 3/08

(54) **WANDEINSATZ**
WALL INSERT
INSERT MURAL

(30) Priorität: 22.12.2010 DE 102010055663
(43) Veröffentlichungstag der Anmeldung: 04.09.2013
(73) Patentinhaber: Schneider Electric Industries SAS, 92500 Rueil-Malmaison (FR)
(72) Erfinder: GÖRLICH, Wolfgang, 53804 Much (DE)
(74) Vertreter: Manitz, Finsterwald & Partner GbR
(86) Internationale Anmeldenummer: PCT/EP2011/006390
(87) Internationale Veröffentlichungsnummer: WO 2012/084168

(56) Entgegenhaltungen:
- EP-A1- 0 921 546
- WO-A1-2007/008077
- DE-A1- 19 947 207
- ELEKTRO-TECHNIK: "ELEKTRO-TECHNIK", ELEKTRO-TECHNIK, Bd. 33, Nr. 28, 13. Juli 1951 (1951-07-13) , Seiten 10-10, XP1479591, coburg

## Beschreibung

Die vorliegende Erfindung betrifft einen Aufputzschalter oder eine Aufputzsteckdose mit einem Wandeinsatz zum abgedichteten Verschließen einer einseitig offenen Gehäuseaussparung.

Derartige Wandeinsätze sind grundsätzlich bekannt und dienen beispielsweise bei Aufputz-Installationsgeräten dazu, eine abgedichtete Kabeldurchführung zu ermöglichen (vgl. Elektro-Technik, Bd. 33, Nr. 28, 13. Juli 1951, Seite 10, Coburg).

Aus der WO 2007/008077 A1 ist eine Einrichtung zum Installieren eines Downlights in einer Betondecke bekannt, wobei die Einrichtung eine Lichtbox und eine Transformatorbox aufweist, die miteinander koppelbar sind.

Es ist die Aufgabe der vorliegenden Erfindung, ein elektrisches Installationsgerät in Form eines einen Aufputzschalters oder einer Aufputzsteckdose mit erhöhter Funktionalität zu schaffen.

Die Lösung dieser Aufgabe erfolgt durch die Merkmale des Anspruchs 1.

Der erfindungsgemäße Wandeinsatz ermöglicht nicht nur das abgedichtete Verschließen der Gehäuseaussparung. Vielmehr ist erfingdungsgemäß durch das an den Wandeinsatz angeformte Zusatzgehäuse eine mechanische und/oder elektrische Zusatzfunktion erzielbar, da dieses außerhalb oder zusätzlich auch innerhalb des Installationsgeräts angeordnet ist und dazu dienen kann, elektrische oder elektronische Bauteile wie beispielsweise Beleuchtungselemente, Funkadapter, Bewegungsmelder oder dergleichen auszunehmen.

Der erfindungsgemäße Wandeinsatz lässt sich kostengünstig herstellen und kann auf einfache Weise auch bei bereits bestehenden Installationsgeräten nachgerüstet werden, wodurch diese mit erweiterten elektrischen Funktionen versehen werden können. Wird beispielsweise der Wandeinsatz mit einem Zusatzgehäuse versehen, in dem Leuchtmittel vorgesehen sind, so lässt sich durch Nachrüsten eines bereits vorhandenen Lichtschalters oder einer Steckdose dieses Installationsgerät nachträglich mit einer Zusatzbeleuchtung versehen.

Vorteilhafte Ausführungsformen der Erfindung sind in der Beschreibung, der Zeichnung sowie den Unteransprüchen beschrieben.

Mit dem Zusatzgehäuse lässt sich die Funktionalität des elektrischen Installationsgeräts erheblich erweitern, da auf diese Weise und auch insbesondere nachträglich zusätzliche elektrische bzw. elektronische Bauteile an dem elektrischen Installationsgerät vorgesehen werden können, so dass dieses beispielsweise um ein Beleuchtungsmodul, einen Funkadapter, einen Bewegungsmelder oder dergleichen erweitert werden kann, ohne dass hierzu ein Austausch des eigentlichen Installationsgeräts erforderlich ist.

Nach einer vorteilhaften Ausführungsform kann das Zusatzgehäuse des Wandeinsatzes einen eigenen Verschlussdeckel aufweisen, so dass die Bauteile innerhalb des Zusatzgehäuses gut und insbesondere gegen Feuchtigkeit geschützt sind.

Nachfolgend wird die vorliegende Erfindung rein beispielhaft anhand einer vorteilhaften Ausführungsform und unter Bezugnahme auf die beigefügten Zeichnungen beschrieben. Es zeigen:
- Fig. 1: eine perspektivische Ansicht eines Unterteils eines elektrischen Installationsgeräts mit noch nicht eingesetztem Wandeinsatz;
- Fig. 2: die Anordnung von Fig. 1 mit einem nicht beanspruchten, in der Gehäuseaussparung des Unterteils eingesetzten Wandeinsatz;
- Fig. 3: eine perspektivische Ansicht eines Unterteils eines elektrischen Installationsgeräts mit einem als Zusatzgehäuse ausgebildeten Wandeinsatzes im noch nicht montierten Zustand;
- Fig. 4: die Anordnung von Fig. 3 im montierten Zustand;
- Fig. 5: eine perspektivische Ansicht eines elektrischen Installationsgeräts mit Zusatzgehäuse im fertig montierten Zustand; und
- Fig. 6: eine Variante der Ausführungsform von Fig. 5.

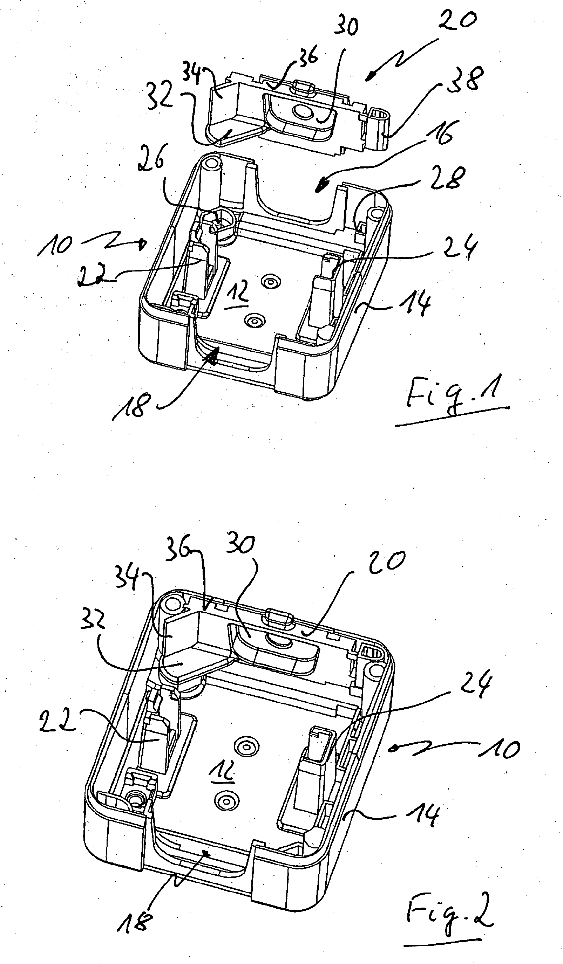

Fig. 1 zeigt ein Unterteil 10 eines elektrischen Installationsgeräts wie beispielsweise eines Aufputzschalters oder einer Aufputzsteckdose, wobei das Unterteil 10 eine Rückwand 12 und eine umlaufende Wand 14 aufweist, in der an zwei gegenüberliegenden Seiten jeweils eine Gehäuseaussparung 16, 18 vorgesehen ist. Jede Gehäuseaussparung 16, 18 ist einseitig, nämlich zur Oberseite des Unterteils hin offen, so dass von oben ein Wandeinsatz 20 (nicht beanspruchte) in die Gehäuseaussparung 16, 18 eingesetzt werden kann.

Im Inneren des Unterteils 10 sind verschiedene Gehäusesockel 22, 24 angeformt, die zur Aufnahme von elektrischen Bauteilen wie beispielsweise Schaltern oder Steckeinsätzen dienen. Weiterhin sind am Boden 12 des Unterteils 10 Montageöffnungen 26, 28 vorgesehen, die das Montieren des Unterteils mit Hilfe von Montageschrauben ermöglichen.

Der Wandeinsatz 20 ist ein plattenförmiges Bauteil, das einstückig aus Hartkunststoff ausgebildet ist und in seinem zentralen Bereich einen mit Hilfe des Zweikomponenten-Spritzverfahrens ausgebildeten Dichtabschnitt 30 aus Weichkunststoff aufweist. Der Dichtabschnitt 30 kann in seiner Mitte durchstoßen werden, um ein Kabel abgedichtet in das Innere des Installationsgeräts einzuführen.

An seiner Außenseite weist der Wandeinsatz 20 ebenso wie das Unterteil 10 miteinander zusammenwirkende Führungen auf, die ein Aufstecken des Wandeinsatzes 20 auf das Unterteil 10 ermöglichen, so dass die Gehäuseaussparung 16 bzw. 18 durch den Wandeinsatz 20 abgedichtet verschlossen ist. Dieser Zustand ist in Fig. 2 dargestellt.

Der Wandeinsatz 20 ist mit Funktionselementen versehen, mit denen eine mechanische und auch elektrische Funktionserweiterung des Installationsgeräts erzielbar ist. Bei dem in den Fig. 1 und 2 dargestellten Wandeinsatz (nicht beansprucht) ist ein erstes Funktionselement durch einen Deckel 32 gebildet, der an den Wandeinsatz 20 angeformt ist und sich unter 90° von diesem in Richtung des Inneren des Unterteils 10 erstreckt. Der Deckel 32 ist dabei so dimensioniert und positioniert, dass dieser die Montageöffnungen 26 im Boden 12 des Unterteils 10 vollständig abdeckt, wenn der Wandeinsatz 20 ordnungsgemäß in der Gehäuseaussparung 16 des Unterteils 10 montiert ist (vgl. Fig. 2). An dem Deckel 32 ist eine sich senkrecht von diesem erstreckende Stützwand 34 angeformt, die gleichzeitig an den Wandeinsatz 20 angeformt ist und die dafür sorgt, dass der Deckel 32 nicht versehentlich von dem Wandeinsatz 20 abgebrochen wird. Weiterhin erstreckt sich die Stützwand 34 von dem Deckel 32 bis hin zu dem oberen Rand 36 des Wandeinsatzes 20, so dass die obere Stirnseite der Stützwand 34 mit dem oberen Rand 36 des Wandeinsatzes 20 fluchtet. Auf diese Weise ist sichergestellt, dass der Deckel 32 mit Hilfe der Stützwand 34 fest auf die Montageöffnung 26 gedrückt wird, wenn das Unterteil 10 zusammen mit seinem zugehörigen Oberteil verbunden bzw. verschraubt ist.

An der dem Deckel 32 gegenüberliegenden Seite des Wandeinsatzes 20 weist dieser ein weiteres Funktionselement in Form eines einstückig angeformten Verbindungskanals 38 auf, der sich an seiner Oberseite ebenfalls bis zu dem oberen Rand 36 des Wandeinsatzes 20 erstreckt. In dem in Fig. 2 dargestellten eingesetzten Zustand befindet sich der Verbindungskanal 38 unmittelbar oberhalb der Montageöffnung 28, so dass eindringende Feuchtigkeit nur in den Verbindungskanal 38, jedoch nicht in das Innere des Gehäuses gelangen kann. Nachdem ein Oberteil auf das Unterteil 10 aufgesetzt ist, ist der Verbindungskanal 38 durch das Oberteil an seiner Oberseite fest verschlossen, so dass keinerlei Feuchtigkeit oder gar Flüssigkeit in das Innere des Installationsgeräts eindringen kann.

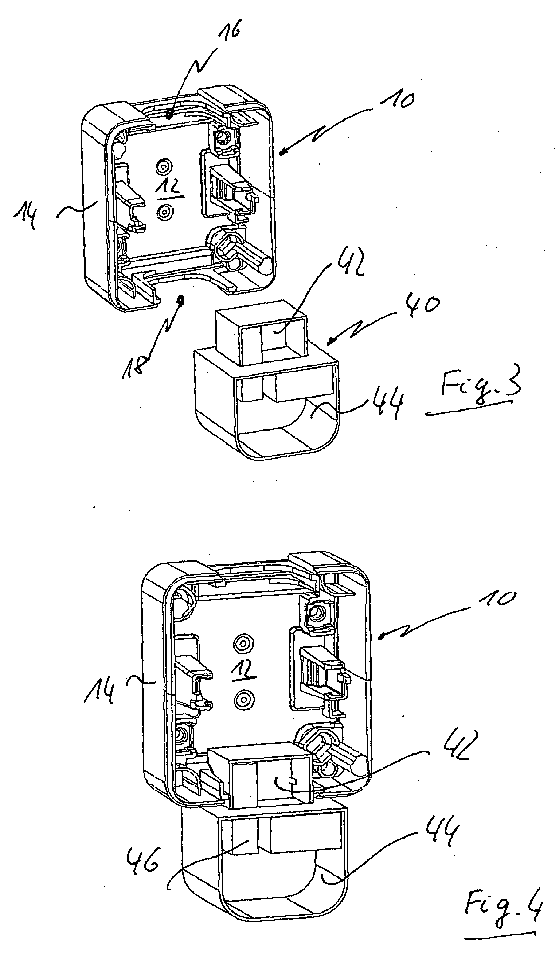

Die Fig. 3 und Fig. 4 zeigen das Unterteil 10 der Fig. 1 und Fig. 2 mit einer Ausführungsform eines Funktionselements, wobei gleiche Teile mit gleichen Bezugszeichen versehen sind.

Bei der in den Fig. 3 und Fig. 4 dargestellten Ausführungsform ist ein Wandeinsatz 40 vorgesehen, der mit nicht näher dargestellten Führungselementen von oben in die Gehäuseaussparung 16 bzw. 18 des Unterteils 10 abgedichtet einsetzbar ist. Bei dieser Ausführungsform weist der Wandeinsatz 40 ein im montierten Zustand (Fig. 4) in das Innere des Unterteils 14 ragendes Zusatzgehäuse 42 und ein außerhalb des Unterteils 10 angeordnetes Zusatzgehäuse 44 auf. In beiden Zusatzgehäuse 42 und 44 können elektrische bzw. elektronische Bauteile 46 angeordnet sein, die eine Funktionserweiterung des Installationsgeräts ermöglichen. Beispielsweise kann es sich bei den Bauelementen 46 um Beleuchtungselemente, Beleuchtungsmodule, Funkadapter, Bewegungsmelder oder dergleichen handeln.

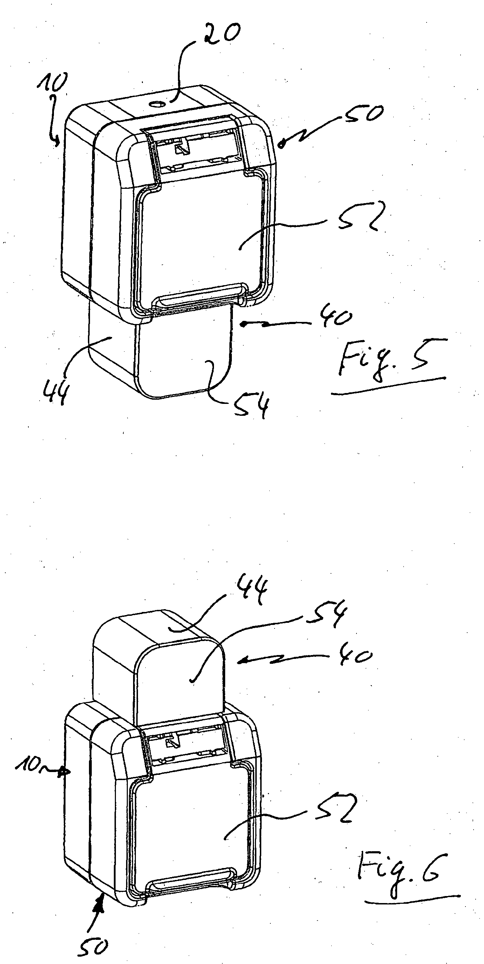

Die Fig. 5 und Fig. 6 zeigen ein elektrisches Installationsgerät mit einem Unterteil 10 der vorstehend beschriebenen Art und einem Wandeinsatz 40, der einmal an der Unterseite und einmal an der Oberseite des Installationsgeräts montiert ist. Das Installationsgerät weist ferner ein Oberteil 50 auf, das mit dem Unterteil 10 verschraubt ist und das auf an sich bekannte Weise einen Klappdeckel 52 aufweist.

Wie die Fig. 5 und Fig. 6 ferner zeigen, ist das Zusatzgehäuse 44 mit einem eigenen Verschlussdeckel 54 versehen, der das Innere schützt. In diesem Verschlussdeckel 54 können auch auf vorteilhafte Weise elektrische Bauteile wie beispielsweise Leuchtelemente oder Sensoren eingebaut werden.

## Patentansprüche

1. Aufputzschalter oder Aufputzsteckdose mit einem Oberteil (50) und einem Unterteil (10), in das ein Wandeinsatz (40) zum abgedichteten Verschließen einer einseitig offenen Gehäuseaussparung (16, 18) eingesetzt ist, an dem zumindest ein Zusatzgehäuse (42, 44) für elektrische Bauteile (46) einstückig angeformt ist, mit dem eine mechanische und/oder elektrische Funktionserweiterung des Installationsgerätes erzielbar ist, wobei das Zusatzgehäuse (44) außerhalb des Unterteils (10) und des Oberteils (50) angeordnet ist.

2. Aufputzschalter oder Aufputzsteckdose nach Anspruch 1,
dadurch gekenntzeichnet, dass
das Zusatzgehäuse (44) auch innerhalb des Unterteils (10) angeordnet ist.

3. Aufputzschalter oder Aufputzsteckdose nach Anspruch 1 oder 2,
**dadurch gekennzeichnet, dass**
das Zusatzgehäuse (44) einen eigenen Verschlussdeckel (54) aufweist.

## Claims

1. A surface-mounted switch or a surface-mounted socket having an upper part (50) and a lower part (10) into which a wall insert (40) is inserted for the sealed closing of a housing cut-out (16, 18) which is open at one side, at which wall insert at least one additional housing (42, 44) for electrical components (46) is molded in one piece, by which a mechanical and/or electric functional expansion of the installation device is achievable, wherein the additional housing (44) is arranged outside the lower part (10) and the upper part (50).

2. A surface-mounted switch or a surface-mounted socket in accordance with claim 1,
**characterized in that**
the additional housing (44) is also arranged within the lower part (10).

3. A surface-mounted switch or a surface-mounted socket in accordance with claim 1 or claim 2,
**characterized in that**
the additional housing (44) has its own closing cover (54).

## Revendications

1. Commutateur ou prise à poser en applique comprenant une partie supérieure (5) et une partie inférieure (10), dans laquelle est mis en place un insert mural (40) destiné à refermer de manière étanche un évidement de boîtier (16, 18) ouvert sur un côté et sur lequel au moins un boîtier additionnel (42, 44) pour des composants électriques (46) est conformé d'une seule pièce, au moyen duquel il est possible d'atteindre une extension fonctionnelle mécanique et/ou électrique de l'appareil d'installation, dans lequel/laquelle le boîtier additionnel (44) est agencé à l'extérieur de la partie inférieure (10) et de la partie supérieure (50).

2. Commutateur ou prise à poser en applique selon la revendication 1, caractérisé/e en ce que le boîtier additionnel (44) est également agencé à l'intérieur de la partie inférieure (10).

3. Commutateur ou prise à poser en applique selon la revendication 1 ou 2,
caractérisé/e en ce que le boîtier additionnel (44) comprend un propre couvercle de fermeture (54).
